# EUROPEAN PATENT APPLICATION

(11) **EP 3 653 827 A1**
(43) Date of publication of application: **20.05.2020**
(21) Application number: 19206549.8
(22) Date of filing: 31.10.2019
(51) Int. Cl.: E06B 3/20, B29C 70/76, E06B 3/66, B29C 39/00, E04D 13/03

(54) **METHOD FOR MANUFACTURING A MULTI-WALLED DEVICE, IN PARTICULAR A MULTI-WALLED ROOF DEVICE**

(30) Priority: 16.11.2018 BE 201805805
(71) Applicant: Skylux N.V., 8530 Stasegem (BE)
(72) Inventor: GLORIEUX, Jean, 9830 Sint-Martens-Latem (BE)
(74) Representative: D'Halleweyn, Nele Veerle Trees Gertrudis

(57) **Abstract**

Method for manufacturing a multi-walled device, in particular a multi-walled roof device, comprising of placing a first wall element and second wall element upright or obliquely adjacently of each other, wherein a lower peripheral part of the first wall element and a lower peripheral part of the second wall element are received in a mould; arranging a curable sealing material in the mould, such that the sealing material flows to a position between the first and second wall element for the purpose of forming a closed spacer between the peripheral parts of the first and second wall element.

## Description

### Field of the invention

The present invention relates a method for manufacturing a multi-walled device, in particular a multi-walled roof device, still more particularly a multi-walled dome device. In addition, the invention relates to multi-walled devices, in particular multi-walled dome devices.

### Background

Roof devices in which one or more flat and/or domed plastic or glass elements are combined are known. Multi-walled plastic domes are thus for instance known in which a number of dome-like shells are arranged at a mutual distance. Dome devices in which a flat transparent plastic plate is combined with a dome-like shell are also known. Examples hereof are described in the following patent publications in the name of applicant: Belgian patent application no. 2016/5645, Belgian patent no. 1020769 and Belgian patent no. 1019311. The text of these patent publications is included here by way of reference.

Such roof devices are typically provided with a frame for mounting on an upstand or on another suitable support structure.

Methods are further known for providing a gasket around a panel, for instance a glass panel for vehicles. EP 2 799 201 thus describes a method for manufacturing a panel assembly with a panel and a gasket, wherein the gasket is adhered to a peripheral part of the panel. Such a technique is for instance useful for glass panels which are mounted in sealed manner in vehicles or for solar panels which are arranged in sealed manner in a frame.

Finally, the Belgian patent application no. 2017/5664 describes an improved method for manufacturing a multi-walled device, wherein a first and a second wall element are arranged one above the other with interposing of a spacer/barrier, and a mould is provided which extends from the upper side of the second wall element to the underside of the first wall element. A sealing material is then arranged in a space which is bounded by the mould, the spacer/barrier and a peripheral part of the first and second wall element. An injection part for injecting the sealing material into the mould is here guided along the periphery of a first and a second wall element.

### Summary of the invention

Embodiments of the invention have the object of providing a method for manufacturing a multi-walled device which is simplified further relative to the methods known in the prior art.

According to a first aspect of the invention, a method is provided which comprises the following steps:
- placing a first wall element and second wall element upright or obliquely adjacently of each other, wherein a lower peripheral part of the first wall element and a lower peripheral part of the second wall element are received in a mould;
- arranging a curable sealing material in the mould, preferably in pressureless manner, such that the sealing material flows to a position between the first and second wall element for the purpose of forming a closed spacer between the peripheral parts of the first and second wall element.

Because the first and second wall element are placed upright or obliquely adjacently of each other, wherein the lower peripheral parts thereof are provided in a mould, sealing material can be arranged in controlled manner between the lower peripheral parts of the first and the second wall element. This is because the sealing material can move upward between the first and the second wall element, wherein the distance over which the sealing material moves upward depends on the injected volume in the mould. Compared to prior art embodiments where the first and second wall elements are arranged horizontally, embodiments of the invention have the advantage that no spacer/barrier is necessary between the first and second wall element in order to stop the sealing material. Note that it is still possible to use a spacer/barrier, but this is not a requirement. As a result of the force of gravity the sealing material can have a more or less horizontal boundary surface in the upright or obliquely placed position of the first and the second wall element. The sealing material itself can thus form a neatly contoured spacer between the first and the second wall element without additional measures being necessary to stop the flow of the sealing material between the first and the second wall element.

According to a possible embodiment, the first and second wall element are moved relative to the mould for the purpose of obtaining a closed spacer over a desired length along the periphery of the first and second wall element. The first and second wall element can for instance have a lower edge, only a portion of which is received in the mould. The first and second wall element can then be moved through the mould for the purpose of obtaining a closed spacer over the whole length of the lower edge. According to an alternative embodiment, the mould is moved along the lower edge of the first and second wall element. Preferably, the movement is parallel to the first and second lower edge. In the context of the present invention the phrase "the first and second wall element are moved relative to the mould" means that the first and second wall element can be moved while the mould is stationary, or that the first and second wall element can be positioned fixedly while the mould is moved. Such embodiments have the advantage that the mould can be relatively small and that the injection can optionally take place at a fixed location in the mould.

According to another possible embodiment, the first and second wall element have a substantially straight lower edge and the whole lower edge of the first and second wall element is received in the mould. In such an embodiment the mould will thus typically be larger than in the previous embodiment. The arranging of sealing material is then preferably performed such that the closed spacer extends along the whole lower edge. An injection part can for this purpose be moved from a first location in the mould, close to a first end of the lower edge, to a second location in the mould, close to a second end of the lower edge. It is also possible to work with a plurality of injection parts, each moving along a part of the lower edge. Injection parts can also be provided in pairs, i.e. a first injection part on an outer side of the first wall element and a second injection part on an outer side of a second wall element. In such an embodiment the mould and the first and second wall element can thus be positioned fixedly, wherein only one or more injection parts are moved in the mould.

The mould is preferably gutter-like, with a bottom surface which is oriented substantially horizontally. The lower peripheral parts of the first and second wall element are then preferably oriented obliquely to or perpendicularly of the bottom surface, preferably parallel to each other, when they are placed in the mould. The angle between the lower peripheral parts of the first and second wall element and the bottom surface is here preferably greater than 60°. In this way the sealing material located between the lower peripheral parts of the first and the second wall element can have a boundary surface positioned perpendicularly of or obliquely to the first and second wall element.

In a possible embodiment the mould is open at an upper end thereof. Such an embodiment has the advantage that such a mould can take a simple form, and that use can be made of different amounts of sealing material and/or different ways of positioning the lower peripheral parts in the mould, depending on the desired result. According to another variant, the mould can be substantially closed, with the exception of one or more injection openings.

In a possible embodiment the mould is provided with a flexible part, and the arranging is done by moving an injection part along the flexible part. The flexible part can for instance be a flexible tongue extending in a peripheral direction of the lower peripheral parts, placed in the mould, of the first and second wall element. The flexible tongue can for instance be a part which connects against an outer side of the first or second wall element. According to another variant, the mould comprises a first and a second mould part, and the flexible tongue can be provided at the position where the first mould part connects to the second mould part, such that this flexible tongue can be opened for the purpose of injecting sealing material. It is particularly when the mould has relatively large dimensions, and it is desirable to use a closed mould, that such an embodiment can be advantageous.

In an advantageous embodiment the sealing material has a dynamic viscosity, measured at a shear rate of 1/s, of below 35000 mPa·s when being arranged in the space. Such sealing materials can be arranged in pressureless manner in an open mould. In a possible embodiment of the invention the mould is only open at the position of a flexible part, such that the shape of the sealing element will be defined largely by the mould.

The sealing material can for instance be a curable polymer composition, such as a polyurethane (PUR) material or an epoxy material. The curable composition is preferably composed such that it is able to produce an elastomeric copolymer material with a sufficiently high density. The sealing material is for instance a polyurethane reaction mixture comprising a polyol and an isocyanate. According to a variant, the sealing material is an epoxy material. The sealing material is for instance supplied as a two-component system, wherein the two components, for instance a resin and a curing material, are inserted into a mixing chamber of an injection part, typically a casting nozzle, and the injection part injects the mixture of the two components into the mould. Such a mixing chamber can for instance be provided with a rotor which rotates automatically when the two components are fed into the mixing chamber.

According to a possible embodiment, the first and the second wall element have a polygonal periphery. In a first step a first edge of the first wall element and a corresponding first edge of the second wall element are received at least partially in the mould, wherein in the position in the mould these first edges lie at the bottom. In this way a first closed spacer can be formed between the first edges of the first and second wall element. This step can then be repeated for all the other edges of the first and second wall element by each time repositioning the first and second wall element in the mould, such that when the final step has been performed, a closed sealing frame is formed between/around the first and the second wall element. As already elucidated above, an edge can either be received wholly in a relatively large mould or be received only partially in a relatively small mould. When the mould is relatively large, arranging of a sealing material can be performed by moving an injection part from a first location close to a first end of the edge to a second location close to a second end of this edge. According to a variant, a plurality of injection parts can be used to cover the whole length of the edge. When the mould is relatively small and an edge of the first and second wall element is received only partially in the mould, the first and the second wall element can be moved relative to the mould for the purpose of obtaining a spacer which extends from a first end to a second end of the relevant edges of the first and second wall element. Preferably, the movement is parallel to the edge of the first and second wall element.

The first and second wall element preferably have a substantially rectangular form. Such a form is typically preferred because it is easier to integrate into and install in a building, typically a roof of a building.

According to another possible embodiment, the first and second wall element have a round periphery. The lower peripheral parts of the first and second wall element are then provided in a mould. The assembly with the first and second wall element can be rotated relative to the mould for the purpose of forming a closed sealing ring between the first and the second wall element. In a possible embodiment the assembly with the first and second wall element can be rotated continuously while sealing material is continuously injected into the mould. It is however also possible to work discontinuously, wherein the first and second wall element are stationary during injection of sealing material between a first and a second peripheral part of the first and second wall element, wherein the assembly is rotated through a predetermined angle after injection of sealing material for the purpose of arranging sealing material between a subsequent first and second peripheral part of the first and second wall element, which steps are repeated until the sealing material extends along the whole periphery of the first and second wall element.

In an advantageous embodiment the first and the second wall element are one of the following: a glass plate, a glass dome, a plastic plate such as a polycarbonate plate, a plastic dome such as a polycarbonate dome.

According to an advantageous embodiment, the first wall element is a plate and the second wall element a dome element. According to another possible embodiment, both wall elements are dome elements. According to yet another embodiment, both wall elements are plates. The skilled person will further appreciate that it is also possible to provide more than two wall elements in the multi-walled device. It is thus also possible to form multi-walled devices with three or more wall elements, wherein a spacer is provided between each pair of adjacent wall elements. One or more additional films can further also be provided between adjacent wall elements.

According to an advantageous embodiment, the first wall element is a glass plate or a glass dome and the second wall element is a plastic plate or a plastic dome. More generally, one or more wall elements of plastic can be combined with one or more wall elements of glass.

According to an advantageous embodiment, the periphery of the first wall element substantially corresponds to a periphery of the second wall element. The skilled person will appreciate that these peripheries can also differ, but that the peripheries being more or less equal has the advantage that the mould can take on a simple form and that a sealed frame can be obtained around the periphery of the first and second wall element with a relatively small amount of sealing material.

In an advantageous embodiment a gas is injected between the first and the second wall element. In this way the insulating value of the multi-walled device can be increased. This gas can for instance be injected during injection of the sealing material, and more specifically just before the whole periphery of the first and second wall element has been provided with sealing material. According to another option, the gas is injected after the sealing frame has been formed by means of needles protruding through the sealing frame, wherein gas is injected while air is expelled. The opening which is arranged through insertion of a needle can be closed again after removal of the needle.

In an advantageous embodiment one or more inserts are incorporated in the mould, preferably one or more of the following inserts: a sensor such as a rain detector, a ventilation component, a lighting element, a bracket, a hinge, a screw-in insert, one or more cables or wires. In this way one or more inserts can be integrated into the frame formed by the sealing material or the ring formed by the sealing material around the first and second wall element. These one or more inserts can thus be incorporated in the multi-walled device in very simple manner, without additional attaching means being required. Compared to existing multi-walled devices, where such components are typically attached using separate attaching means, such embodiments thus have the advantage that these inserts can be incorporated more easily.

According to a further aspect of the invention, a multi-walled device is provided which is manufactured according to any one of the above described embodiments of the method. According to an aspect of the invention, the multi-walled device comprises a first wall element, a second wall element and a cured sealing material extending along the whole periphery of the first and second wall element to a position between peripheral parts of the first and second wall element, wherein the cured sealing material is adhered to the whole periphery of the first and second wall element. No separate spacer is preferably present here between the first and the second wall element. The spacer is formed by the cured sealing material itself.

According to an advantageous embodiment, the sealing material is a cured polymer composition, preferably a cured copolymer such as a cured polyurethane material or a cured epoxy material.

In an advantageous embodiment the first and the second wall element have a polygonal periphery, preferably a rectangular periphery. In an advantageous embodiment the first wall element has a first side and a second side which is directed toward a first side of the second wall element, wherein the cured sealing material extends to a second side of the second wall element and/or to the first side of the first wall element. In this way the assembly formed by the first wall element, the second wall element and the sealing material is firmly anchored.

According to a possible embodiment, the first and the second wall element are one of the following: a glass plate, a glass dome, a plastic plate such as a polycarbonate plate, a plastic dome such as a polycarbonate dome. In embodiments of the invention one or more plate-like wall elements can be combined with one or more domed wall elements, but it is also possible to combine two or more plate-like elements without dome elements or to combine two or more domed wall elements without plate-like elements. One or more wall elements of glass can further be combined with one or more wall elements of plastic. A periphery of the first wall element here preferably corresponds substantially to a periphery of the second wall element.

In embodiments where the second wall element is domed the second wall element preferably comprises four substantially flat parts running obliquely upward or horizontally from the outer periphery and fitting against a central domed part.

Advantageous features described above on the basis of embodiments of the method likewise apply to the multi-walled device itself. Further advantageous embodiments are described in the appended claims.

### Brief figure description

The above stated and other advantageous features and objects of the invention will become more apparent, and the invention better understood, on the basis of the following detailed description when read in combination with the accompanying drawings, in which:
Figure 1A illustrates a schematic cross-section of a first and second wall element which are arranged in a mould;
Figure 1B illustrates the first and second wall element with closed spacer after removal from the mould;
Figure 1C illustrates a schematic front view of a first and second wall element received in a mould, according to a first embodiment;
Figure 1D illustrates a schematic front view of a first and second wall element received in a mould, according to a second embodiment;
Figures 2A-2D illustrate schematic cross-sections of different embodiments of a mould for use in the invention;
Figure 3 illustrates a schematic front view of an embodiment of a method according to the invention;
Figure 4 illustrates a schematic front view of another embodiment of a method according to the invention;
Figure 5 illustrates a schematic perspective view of a first and second wall element which are arranged in a mould; and
Figures 6-8, 9B, 10, 11 illustrate schematic cross-sections of different embodiments of a multi-walled device according to the invention, and figure 9A illustrates schematically a method for manufacturing the device of figure 9B.

### Detailed embodiments

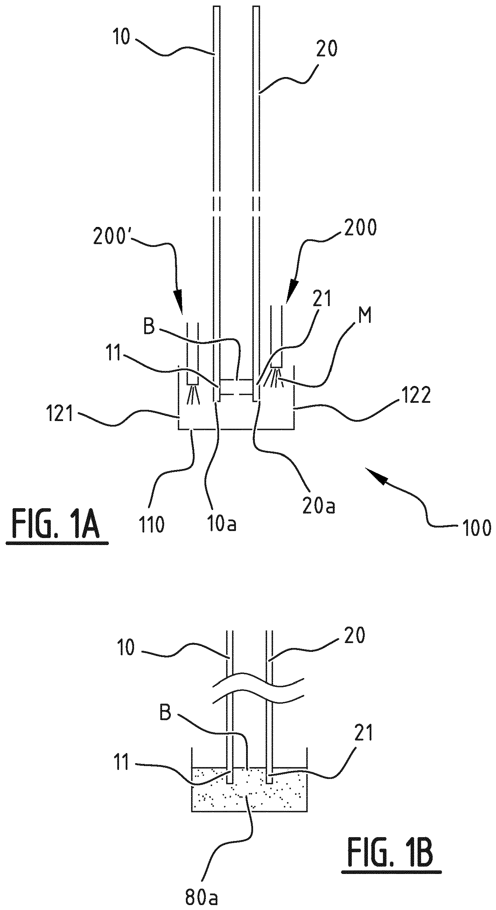

Figures 1A and 1B illustrate schematically a first embodiment of a method for manufacturing a multi-walled device, here a multi-walled roof device. In a first step, a first wall element 10 and a second wall element 20 are placed upright or obliquely, adjacently of each other, in a mould 100. A lower peripheral part 11 of first wall element 10 and a lower peripheral part 21 of second wall element 20 is here received in mould 100. A curable sealing material M is then arranged, preferably in pressureless manner, in mould 100, in figure 1A by means of two injection parts 200, 200'. In other variants it is possible to suffice with one injection part 200 or one or more injection openings. The sealing material M arranged by injection parts 200, 200' flows into mould 100, to a position between the first and the second wall element 10, 20, for the purpose of forming a closed spacer 80a between the peripheral parts 11, 21 of first and second wall element 10, 20. Sealing material 80a can further extend to a position against an outer side of the first wall element and/or against an outer side of second wall element 20, depending on the form of the mould. Because the lower peripheral parts 11, 21 are arranged perpendicularly of a horizontal plane, a boundary surface B of the sealing material M which extends between the first and second wall element 10, 20 will be oriented substantially perpendicularly of the peripheral parts 11, 21, wherein the height of the boundary surface B will be determined by the amount of injected sealing material. In this way a neatly contoured boundary surface B will be obtained, without a spacer/barrier being necessary between the first and the second wall element 10, 20. This can be seen in figure 1B, where first and second wall element 10, 20 are shown after the sealing material has cured and the thus formed assembly has been removed from mould 100.

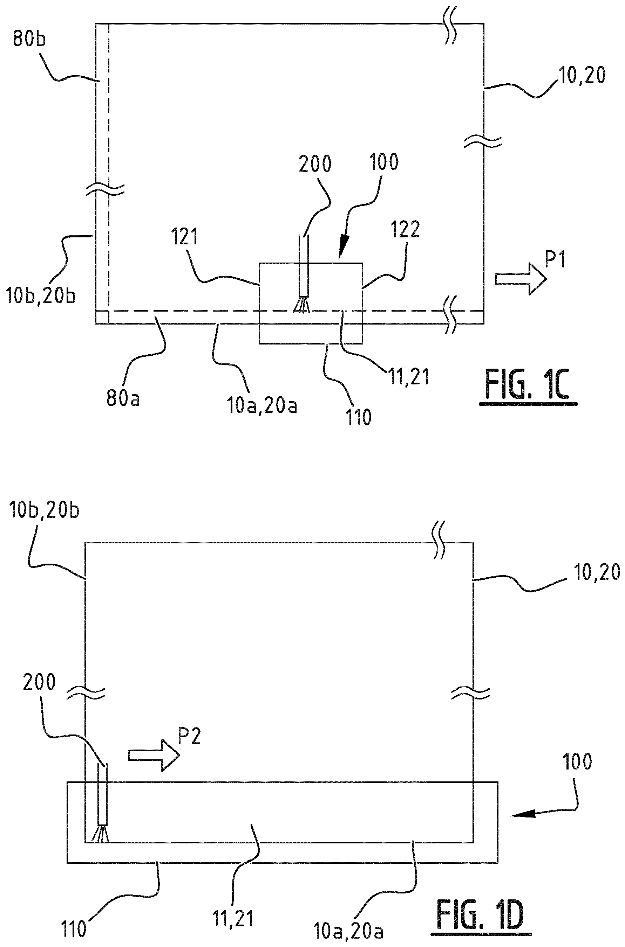

Figure 1C illustrates a first embodiment of the method wherein the first and second wall element 10, 20 are received with their lower edge 10a, 20a partially in mould 100. Mould 100 can thus be relatively small here, wherein one or more injection parts 200 can be arranged fixedly relative to mould 100. In such an embodiment the first and second wall element 10, 20 can be moved in the direction of arrow PI for the purpose of obtaining a closed spacer over the whole lower edge 10a, 20a of the first and second wall element 10, 20. After a closed spacer 80a has been arranged along lower edges 10a, 20a the thus formed assembly can be removed from mould 100 and be rotated through 90° for the purpose of placing a second edge 10b, 20b in mould 100. In this way a series of closed spacers 80a, 80b, and so on can be formed for the purpose of forming a closed frame which extends along the whole periphery of first and second wall element 10, 20.

Figure 1D illustrates another possible embodiment wherein the whole lower edge 10a, 20a of first and second wall element 10, 20 is received in a mould 100. Mould 100 is here relatively large, and in such an embodiment one or more injection parts 200 are moved in the direction of arrow P2 while sealing material is injected into the mould. An injection part 200 can for instance be moved from a first location close to a first end of the lower edges 10a, 20a to a second location close to a second end of the lower edges 10a, 20a. This step can here also be repeated for the other edges 10b, 20b, and so on of the first and second wall element for the purpose of forming a closed frame around the whole periphery of first and second wall element 10, 20.

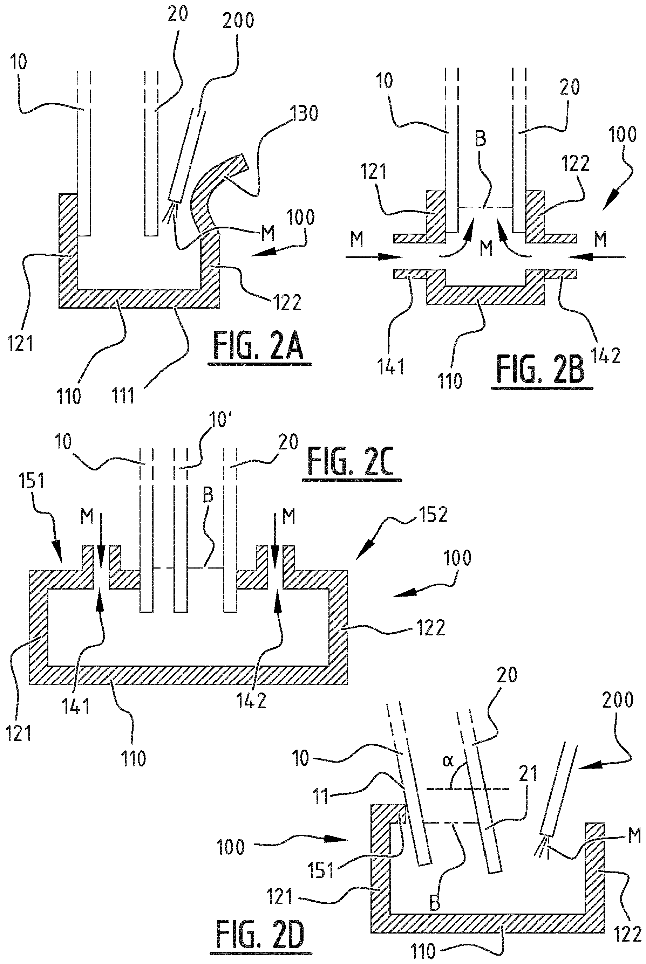

Figures 2A-2D illustrate different possible embodiments for mould 100. In the variant of figure 2A mould 100 is provided with a flexible tongue 130 which in the unopened position connects to an outer side of second wall element 20. Mould 100 has a bottom wall 110 and two upright side walls 121, 122. Flexible tongue 130 connects to second side wall 122. First upright side wall 121 connects directly to an outer side of first wall element 10. The skilled person will appreciate that the inner surface of mould 100 can take a random form, depending on the desired form and dimensions of the sealing frame to be formed. Flexible tongue 130 can be opened for the purpose of inserting an injection part 200 for arranging sealing material in the space bounded by mould 100. In use the mould 100 is placed such that a bottom surface 111 of bottom wall 110 is oriented horizontally.

Figure 2B illustrates another possible variant of a mould 100 with a bottom wall 110 and two upright side walls 121, 122. In the embodiment of figure 2B a first injection opening 141 is arranged in first upright side wall 121, and a second injection opening 142 is arranged in second side wall 122. The skilled person will appreciate that it is also possible to provide only one injection opening, or to provide more than two injection openings. Sealing material M is injected through the one or more injection openings 141, 142 and runs upward between the first and second wall element 10, 20 for the purpose of forming a closed spacer.

Figure 2C illustrates yet another variant wherein mould 100 has a bottom wall 110, two upright side walls 121, 122 and two top wall parts 151, 152. The top wall parts 151, 152 connect to respectively an outer side of first wall element 10 and an outer side of second wall element 20. Further arranged in first and second top wall part 151, 152 are respectively a first and a second injection opening 141, 142. Once again, the skilled person will appreciate that it is also possible to provide only one injection opening or more than two injection openings. In the variant of figure 2C it is further illustrated that an additional wall element 10' can be provided between the first and the second wall element 10, 20.

Figure 2D illustrates yet another variant of a mould 100 in which the lower peripheral parts of the first and second wall element 10, 20 are placed obliquely adjacently of each other, and form an angle α with a horizontal plane. The angle α is preferably greater than 60°. In the illustrated embodiment mould 100 has an open upper end in which an injection part 200 is arranged. Mould 100 has a bottom wall 110, a first upright side wall 121 with a top wall part 151 which connects to an outer side of the first wall element, and a second upright side wall 122 which is adjacent to the open upper end of mould 100.

The skilled person will appreciate that many other variants are possible within the context of the invention, wherein the mould is configured only to allow the sealing material to flow upward between the two wall elements 10, 20 placed obliquely or upright.

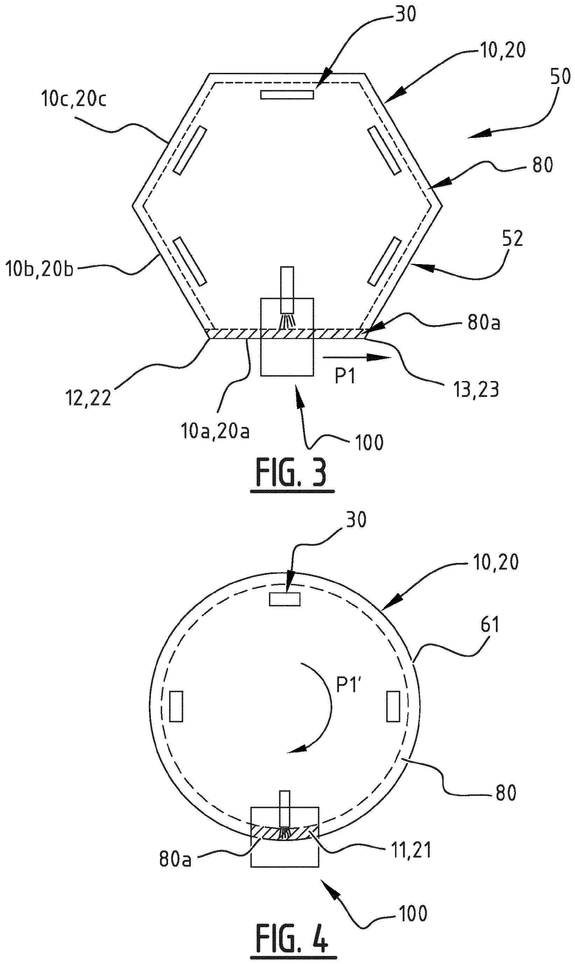

Figure 3 illustrates an embodiment of the method for a first and second wall element 10, 20 with a polygonal periphery, here a hexagonal periphery. First and second wall element 10, 20 are placed upright, with a part of their lower edge 10a, 20a in a mould 100. At several other locations spacers 30 can optionally be provided between the first and the second wall element 10, 20, wherein these spacers 30 can be removed when they are replaced by closed spacers 80a formed by the cured sealing material. During injection of sealing material the first and the second wall element can be moved in the direction of arrow PI, such that sealing material is arranged along the whole of the lower edges 10a, 20a for the purpose of forming a closed spacer 80a. This step can be repeated for the other edges 10b, 20b, 10c, 20c, and so on.

Figure 4 illustrates another variant of a method for manufacturing a multi-walled device, wherein the first and second wall element 10, 20 have a round periphery, such that a round assembly is formed by the first and the second wall element 10, 20 and the cured sealing material 80a arranged therebetween. A lower peripheral part 11, 21 of first and second wall element 10, 20 is received in a mould 100. Mould 100 can optionally have a cylindrical inner wall which runs parallel to the periphery of first and second wall element 10, 20. In a possible embodiment first and second wall element 10, 20 are rotated in the direction of arrow P1' while sealing material is injected into mould 100. By controlling the injection speed and the rotation speed in suitable manner a closed spacing ring 80 can be obtained around and between first and second wall element 10, 20. According to another possible embodiment, the rotation of first and second wall element 10, 20 takes place in discontinuous manner, and the sealing material is arranged in steps, peripheral part by peripheral part.

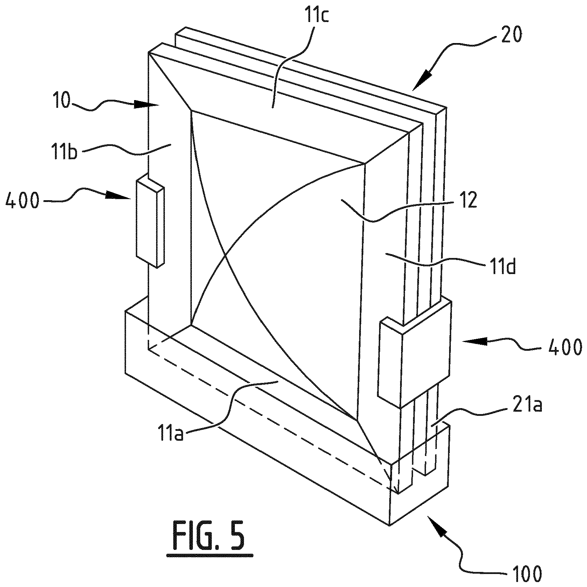

Figure 5 illustrates in more detail a possible embodiment of a first and second wall element 10, 20 which are arranged in a mould 100. In the illustrated embodiment first wall element 10 comprises four substantially flat parts 11a, 11b, 11c, 11d which run from the outer periphery obliquely upward or horizontally and which connect to a central domed part 12. Second wall element 20 can be a flat plate or can be a dome element which is similar to first wall element 10. The first and the second wall element 10, 20 can optionally be fixed in a determined position in mould 100 using fixing means 400. Fixing means 400 can comprise a spacer part which is located between the first and the second wall element 10, 20. No spacer is however provided between lower peripheral parts 11a, 21a. These lower peripheral parts 11a, 21a are arranged in mould 100. Sealing material is injected into mould 100, such that the sealing material flows upward between lower peripheral part 11a of first wall element 10 and lower peripheral part 21a of second wall element 20. Figure 5 illustrates a variant wherein the whole of the lower edges 10a, 20a is received in mould 100, although the skilled person will appreciate that the mould can also extend over only a portion of the lower edge, as in the above described embodiment of figure 1C.

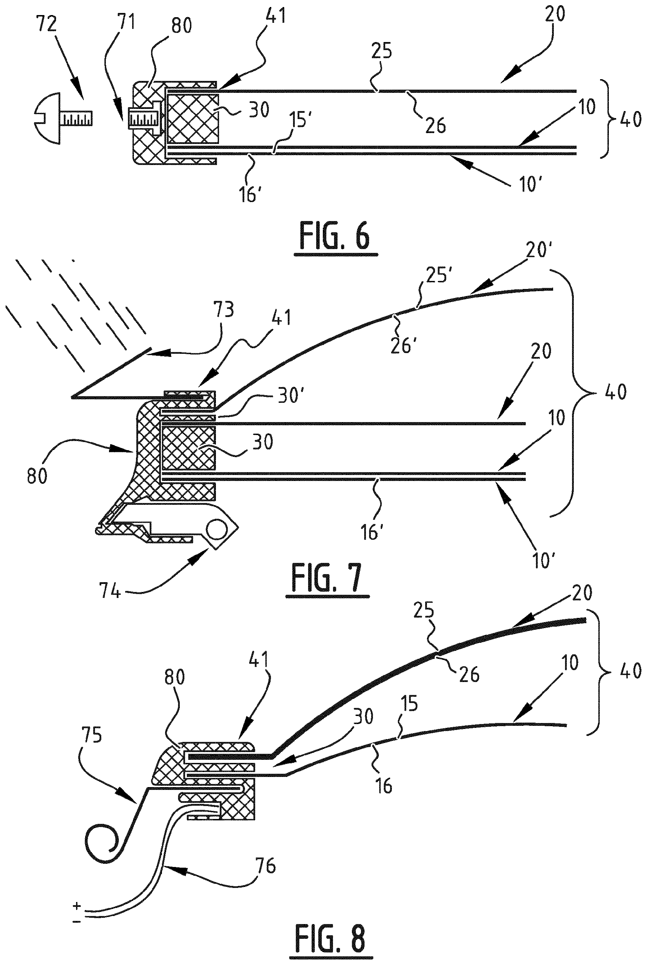

Figure 6 illustrates a possible embodiment of a multi-walled device according to the invention. The multi-walled device of figure 6 comprises a first wall element 10, an additional first wall element 10' arranged under first wall element 10, a second wall element 20 and a cured sealing material 80 which extends to a position between first and second wall element 10, 20. Wall elements 10, 10', 20 can for instance be glass plates or polycarbonate plates. First wall element 10 and additional wall element 10' can for instance be a glass plate. Glass plate 10 is then preferably adhered to glass plate 10'. A film can for instance be provided for this purpose between glass plate 10 and glass plate 10', for instance a polyvinyl butyral (PVB) film. According to an alternative, a light-transmitting plastic layer, for instance a polycarbonate layer, can be provided between glass plate 10 and glass plate 10'. Such an embodiment has the advantage that the impact resistance is improved, that this embodiment is lightweight (the plastic layer contributes to the strength of the whole and is lighter than glass), and enables a better fire classification. The use of a plastic layer ensures that if the glass shatters as a result of fire, the plastic layer nevertheless prevents an opening from being created. According to a variant, one lower glass plate 10 of toughened glass can be provided, and wall element 10' can thus be dispensed with.

Wall elements 10, 10', 20 and cured sealing material 80 together form an assembly 40 with a peripheral frame/spacer 41 which is formed by sealing material 80. Sealing material 80 is adhered to wall elements 10, 10', 20 and forms a sealing frame 41 around the whole periphery of assembly 40. Sealing material 80 extends from an upper side 25 of second wall element 20 to an underside 15' of the lower additional wall element 10', and between wall elements 10, 20. An insert, here a screw-in insert 71, is incorporated in sealing material 80. The insert can on the one hand be held by adhesion to the sealing material and on the other by giving the insert a suitable form which ensures an anchoring of the insert in sealing material 80. The illustrated embodiment with screw-in insert 71 has the advantage that accessories can be easily attached to the multi-walled device. An awning can thus for instance be attached using a screw 72 which is screwed into screw-in insert 71. Figure 6 shows the multi-walled device in cross-section, and the skilled person will appreciate that a plurality of screw-in inserts 71 can be provided, distributed over the periphery of the multi-walled device. Other inserts such as sensors, ventilation components, lighting elements, brackets, hinges, cables or wires, and so on can further also be incorporated in the sealing material.

Figure 7 illustrates a further developed embodiment of a multi-walled device which is similar to that of figure 6, with the difference that an additional upper wall element 20' is provided above the second wall element 20. The assembly 40 formed by wall elements 10, 10', 20, 20' and sealing material 80 has a closed peripheral part 41 extending from an upper side 25' of the additional upper wall element 20' to an underside 16' of the lower additional wall element 10', and between wall elements 10, 20, 20'. Sealing material 80 is adhered to wall elements 10, 10', 20, 20'. Incorporated in the sealing frame formed by sealing material 80 is a rain detector 73 and a bracket 74. Bracket 74 is for instance intended for mounting of a surface-mounting motor for the purpose of opening/closing the multi-walled device. The above discussion of wall elements 10, 10' of figure 6 also applies to wall elements 10, 10' in figure 7.

Figure 8 illustrates yet another variant of a multi-walled dome device. The multi-walled dome device of figure 8 comprises a first wall element 10 with an upper side 15 and an underside 16, a second wall element 20 with an upper side 25 and an underside 26. Sealing material 80 extends from an upper side 25 of second wall element 20 to an underside 16 of first wall element 10, and further between the underside 26 of second wall element 20 and the upper side 15 of first wall element 10. Sealing material 80 extends along the whole periphery of assembly 40 such that sealing material 80 forms a sealing frame for the assembly 40. One or more inserts can be incorporated in the sealing material 80. In the variant of figure 8 a hinge 75 and a set of electric wires 76 are incorporated in sealing material 80. Electric wires 76 can for instance be used to power lighting elements and/or other electronic components such as sensors. Using hinge 75 the multi-walled dome device can be hingedly mounted.

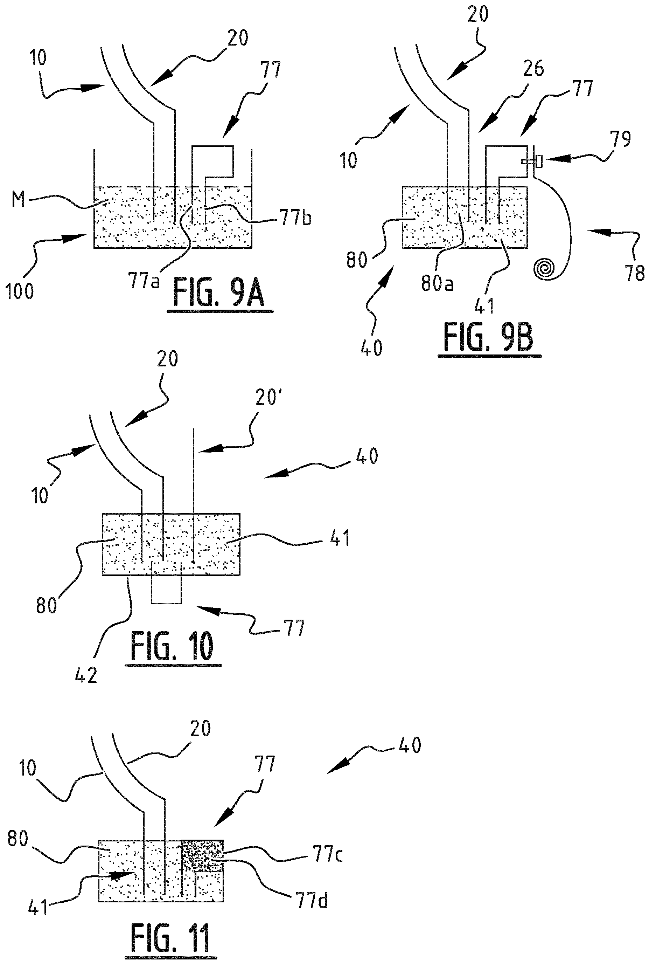

Figures 9A and 9B illustrate a possible embodiment of a multi-walled device with yet another insert. Figure 9A illustrates that a first wall element 10 and a second wall element 20 are arranged together with an insert, here connection profile 77, for instance manufactured from steel, in a mould 100 with an open upper side, wherein sealing material M is arranged up to a position between the first and second wall element 10, 20 and between two walls 77a, 77b of connection profile 77, all this such that wall elements 10, 20 and connection profile 77 are anchored in the sealing material.

Wall elements 10, 20, connection profile 77 and cured sealing material 80 together form an assembly 40 with a peripheral frame/spacer 41 which is formed by the sealing material 80. Sealing material 80 is adhered to wall elements 10, 20 and to connection profile 77, and forms a sealing frame 41 around the whole periphery of assembly 40. Sealing material 80 extends from an upper side 15 of first wall element 10 to an underside 26 of second wall element 20, and between wall elements 10, 20, and from an upper side of wall 77a to an underside of wall 77b, and between the walls 77a, 77b of connection profile 77. The illustrated embodiment with connection profile 77 has the advantage that components such as a hinge 78 or a bracket can be fastened in simple manner to connection profile 77, for instance with screws 79. Figure 9B shows the multi-walled device in cross-section, and the skilled person will appreciate that a plurality of components can be fastened to connection profile 77, distributed over the periphery of the multi-walled device. Other inserts such as sensors, ventilation components, lighting elements, cables or wires, and so on can further also be incorporated in the sealing material.

Figure 10 illustrates a variant of the multi-walled device of figure 9B, wherein connection profile 77 is provided at the bottom of the mould during forming of a sealing frame 41, such that connection profile 77 protrudes along an outer side wall 42 of the sealing frame 41. A removable element or a soft material can here be arranged in connection profile 77 in order to prevent the connection profile from completely filling up with sealing material.

Figure 11 illustrates yet another variant of the multi-walled device of figure 9B, wherein connection profile 77 is incorporated wholly in the sealing material 80, wherein a wall part 77c lies adjacently of an outer wall of a sealing frame 41. A thin skin of sealing material can optionally be provided on this wall part 77c. As soft material 77d can here be arranged in connection profile 77 in order to prevent the connection profile from completely filling up with sealing material. One or more components (not shown) can then be fastened to connection profile 77, wherein fastening means such as screws can protrude through the soft material 77d.

In the figures the first wall element 10 and the second wall element 20 can be one of the following: a glass plate, a glass dome, a plastic plate such as a polycarbonate plate, a plastic dome such as a polycarbonate dome. In the embodiments of the figures the wall elements 10, 20, 10', 20' are drawn schematically as plates or dome elements, but the skilled person will appreciate that plate-like and/or domed wall elements can be combined in random manner, and that more than two wall elements can be combined in similar manner. One or more wall elements of glass can further be combined with one or more wall elements of plastic. A periphery of the first wall element here preferably corresponds substantially to a periphery of the second wall element.

The skilled person will appreciate that many variants can be envisaged within the scope of the invention, which is defined solely by the following claims.

## Claims

1. Method for manufacturing a multi-walled device, in particular a multi-walled roof device, comprising of:
- placing a first wall element (10) and second wall element (20) upright or obliquely adjacently of each other, wherein a lower peripheral part (11) of the first wall element and a lower peripheral part (21) of the second wall element are received in a mould (100) ;
- arranging a curable sealing material (M) in the mould, such that the sealing material flows to a position between the first and second wall element for the purpose of forming a closed spacer (80a) between the peripheral parts (11, 21) of the first and second wall element.

2. Method according to claim 1, wherein the arranging of the curable sealing material takes place in pressureless manner.

3. Method according to claim 1 or 2, wherein the arranging of the curable sealing material comprises the first and second wall element being moved (PI) relative to the mould for the purpose of obtaining a closed spacer over a desired length along the periphery of the first and second wall element.

4. Method according to claim 1 or 2, wherein the first and second wall element have a substantially straight lower edge (10a, 20a), and wherein the whole lower edge of the first and second wall element are received in the mould, and wherein the arranging is performed such that the closed spacer extends along the whole lower edge.

5. Method according to the foregoing claim, wherein the arranging is done by moving an injection part in a direction parallel to the lower edge (P2).

6. Method according to any one of the foregoing claims, wherein the mould (100) is gutter-like, with a bottom surface (110) which is oriented substantially horizontally, and wherein the peripheral part (11, 21) of the first and second wall element are oriented obliquely to or perpendicularly of the bottom surface, preferably parallel to each other.

7. Method according to any one of the foregoing claims, wherein the mould is open at an upper end thereof.

8. Method according to any one of the foregoing claims, wherein the mould is provided with a flexible part (130); wherein the arranging is done by moving an injection part along the flexible part.

9. Method according to any one of the foregoing claims, wherein the sealing material has a dynamic viscosity, measured at a shear rate of 1/s, of below 35000 mPa·s when being arranged;
wherein preferably the sealing material is a curable polymer composition, for instance a PUR material or an epoxy material.

10. Method according to any one of the foregoing claims, wherein the first and the second wall element have a polygonal periphery, wherein a first edge (10a) of the first wall element and a corresponding first edge (20a) of the second wall element are received at least partially in the mould (100) for the purpose of forming a first closed spacer (80a) between the first edges (10a, 20a) of the first and second wall element, which step is repeated for all the other edges (10b, 20b; etc) of the first and second wall element, such that a closed sealing frame (80) is formed between the first and second wall element; and/or
wherein preferably the first and second wall elements (10, 20) have a substantially rectangular periphery.

11. Method according to the foregoing claim, wherein the first edges of the first and second wall element are received wholly in the mould and the arranging of a curable sealing material can be performed by moving an injection part (200) from a first location close to a first end (12, 22) of the first edges to a second location close to a second end (13, 23) of the first edges; or
wherein the first edges of the first and second wall element are received partially in the mould, and wherein the first and second wall element are moved (PI) relative to the mould for the purpose of obtaining a closed spacer from a first end (12, 22) to a second end (13, 23) of the first edges (10a, 20a) of the first and second wall element.

12. Method according to any one of the claims 1-9, wherein the first and the second wall element have a round periphery, and wherein the first and the second wall element are rotated (P1') relative to the mould, such that a closed sealing ring (80) is formed between the first and second wall element.

13. Method according to any one of the foregoing claims, wherein the first and the second wall element (10, 20) are one of the following: a glass plate, a glass dome, a plastic plate such as a polycarbonate plate, a plastic dome such as a polycarbonate dome; and/or
wherein the first wall element (10) is a plate and the second wall element (20) is a dome; and/or
wherein the first wall element (10) is a glass plate or a glass dome, and the second wall element (20) is a plastic plate or a plastic dome; and/or
wherein a periphery of the first wall element substantially corresponds to a periphery of the second wall element; and/or
wherein a gas G is injected between the first wall element (10) and the second wall element (20); and/or
wherein one or more inserts are incorporated in the mould, preferably one or more of the following inserts: a sensor such as a rain detector (73), a ventilation component, a lighting element, a bracket (74), a hinge (75), a screw-in insert (71), one or more cables or wires (76), a connection profile (77) to which one or more components (78) can be fastened;
and/or
wherein one or more additional wall elements (10', 20') are provided in the mould adjacently of the first and/or second wall element, and wherein one or more lower peripheral parts of the one or more additional wall elements (10', 20') are received in the mould (100).

14. Multi-walled device, preferably manufactured according to the method of any one of the claims 1-13, comprising a first wall element, a second wall element and a cured sealing material extending along the whole periphery of the first and second wall element to a position between peripheral parts of the first and second wall element for the purpose of forming a spacer between the first and second wall element, wherein the cured sealing material is adhered to the whole periphery of the first and second wall element, and no separate spacer is preferably present between the first and the second wall element.

15. Multi-walled device according to claim 14, wherein the sealing material is a cured polymer composition, preferably a cured copolymer such as a cured polyurethane material, or a cured epoxy material; and/or
wherein the first and the second wall element have a polygonal periphery, preferably a rectangular periphery; and/or
wherein the first wall element has a first side and a second side which is directed toward a first side of the second wall element, wherein the cured sealing material extends to a second side of the second wall element and/or to the first side of the first wall element;
and/or
wherein the first and the second wall element are one of the following: a glass plate, a glass dome, a plastic plate such as a polycarbonate plate, a plastic dome such as a polycarbonate dome; and/or
wherein the first and/or the second wall element comprises a central domed part and four substantially flat parts running obliquely upward or horizontally from the outer periphery and fitting against a central domed part.
